# EUROPEAN PATENT SPECIFICATION

(11) **EP 4 071 341 B1**
(45) Date of publication and mention of the grant of the patent: **20.09.2023**
(21) Application number: 22175600.0
(22) Date of filing: 09.06.2021
(51) Int. Cl.: F02K 1/72, F02K 1/60

(54) **THRUST REVERSER WITH ACTUATION RING FOR TURBOFAN PROPULSION SYSTEM OF AN AIRCRAFT, AND RELATED TURBOFAN PROPULSION SYSTEM AND THRUST REVERSAL METHOD**
SCHUBUMKEHRVORRICHTUNG MIT EINEM BETÄTIGUNGSRING FÜR EIN TURBOGEBLÄSETRIEBSSYSTEM EINES FLUGZEUGS UND ENTSPRECHENDES TURBOGEBLÄSETRIEBSSYSTEM UND SCHUBUMKEHRVERFAHREN
INVERSEUR DE POUSSÉE AVEC ANNEAU D'ACTIONNEMENT POUR SYSTÈME DE PROPULSION À TURBORÉACTEUR D'UN AÉRONEF, SYSTÈME DE PROPULSION À TURBORÉACTEUR ASSOCIÉ ET PROCÉDÉ D'INVERSION DE POUSSÉE

(30) Priority: 10.06.2020 IT 202000013846
(43) Date of publication of application: 12.10.2022
(62) Divisional of application: 21734504.0
(73) Proprietor: Leonardo S.p.A., 00195 Roma (IT)
(72) Inventor: POLI, Massimo, 21057 Olgiate Olona (Varese) (IT); VERCELLESI, Marco, 20131 Milano (Italy) (IT)
(74) Representative: Verdecchia, Valerio

(56) References cited:
- DE-A1- 1 937 679
- US-A- 2 933 890
- US-A1- 2014 061 332
- US-A1- 2016 363 097
- US-A1- 2017 198 658
- US-A1- 2019 284 952

## Description

### Technical field

The present invention relates to a thrust reverser for an aircraft turbofan propulsion system, a related turbofan propulsion system, and a related thrust reversal method, adapted to allow an at least partial reversal of the thrust provided by the turbofan propulsion system.

### Prior art

In the field of aircraft propulsion systems, and particularly with application to turbofan propulsion systems, the use of movable blocker doors to provide thrust reversal is generally known. This architecture relies on blocking the outflow of air through one or more blocker doors-often also known as "petals"-that are positioned to completely or partially occlude an air outflow duct. These petals are typically driven by a series of rods, which may be located in the outflow duct of the engine or embedded in the structure of the propulsion system. Generally, the thrust reverser system is composed of two parts, a fixed one and a translating one, which are connected by beams that have runners adapted to allow the relative movement of the translating structure with respect to the fixed structure. The relative movement of the two parts provides, through the rotation of a blocker door, the at least partial occlusion of the outflow duct, and, simultaneously, opens an outflow circumferential opening to the environment outside the propulsion system. It is also known to associate a plurality of guiding structures, i.e., a "cascade," aimed at guiding the aerodynamic flow out of said circumferential opening to said circumferential opening.

An example of such a thrust reverser system is shown in U.S. Patent Application US 2019/0032600 A1. Other examples are shown in US Patent Applications US 2019/284952 A1 and US 2017/198658 A1.

Propulsion systems comprising thrust reverser systems according to the prior art just described, however, have several disadvantages.

First, the presence of so many movable components, arranged inside the outflow duct, and therefore having stringent structural constraints, makes the known thrust reverser systems heavy, expensive, difficult to make, and moreover makes rather frequent maintenance necessary.

In addition, the presence of blocker doors causes a plurality of aerodynamic discontinuities, transverse and inclined with respect to airflow.

Lastly, these known systems require a non-negligible amount of space, and their bulk makes any maintenance work on the substructure, systems, or the propulsion system engine itself inconvenient and slow. In particular, with the known thrust reverser systems it is not possible to open and inspect the fixed and movable structures of the thrust reverser system when the bypass duct has an O or ring cross section.

### Summary of invention

The object of the present invention is to provide a thrust reverser system for a turbofan propulsion system that does not have the disadvantages of the prior art.

A further object of the invention is to provide a turbofan propulsion system comprising a thrust reverser system that does not have the disadvantages of the prior art.

A further object of the invention is to provide a method for thrust reversal of an aircraft turbofan propulsion system that does not have the disadvantages of the prior art.

Further objects of the invention are to provide a thrust reverser system and a turbofan propulsion system comprising a thrust reverser system that is improved with respect to the prior art, and/or having fewer components, and/or wherein any bleeding of the occluded air stream is minimized, and/or wherein the acoustically treatable surface area is maximized, so as to significantly reduce acoustic emission with respect to the prior art.

This and other objects are fully achieved according to the present invention by a thrust reverser system as defined in the appended claim 1, by a turbofan propulsion system as defined in claim 9, and by a method for thrust reversal of a turbofan propulsion system of an aircraft as defined in the appended claim 15.

Advantageous embodiments of the invention are specified in the dependent claims, the content of which is to be understood as an integral part of the description that follows.

In summary, the invention is based on the idea of providing a thrust reverser system comprising a movable mechanism for making an opening adapted to allow the outflow of air to the external environment and an iris mechanism adapted to at least partially occlude the air passage.

In summary, according to a further aspect of the invention, the invention is based on the idea of providing a turbofan propulsion system comprising a thrust reverser system having a movable mechanism for making an opening adapted to allow the outflow of air to the external environment and an iris mechanism adapted to at least partially occlude the air passage.

Lastly, in summary, according to a further aspect of the invention, the invention is based on the idea of providing a method of thrust reversal in a turbofan propulsion system having a bypass duct, wherein the thrust reversal is provided by an outflow of air from the bypass duct to the external environment by means of a radial opening in conjunction with the at least partial occlusion of the bypass duct by means of an iris mechanism.

Advantageously, the thrust reverser system is configured in such a way that the movement of the translating structure between the stowed position and the opening position and the movement of said plurality of blades of the iris mechanism between said rest configuration and said deployed configuration are driven in a coordinated manner.

Preferably, the thrust reverser system further comprises a plurality of outflow guides, preferably arranged integral in translation with the translating structure, and adapted to guide the outflow of air from the bypass duct to the external environment through the circumferential opening defined between a translating structure and a fixed structure when the translating structure is in an opening position.

### Brief description of the drawings

The features and advantages of this invention will be clarified by the detailed description that follows, given purely by way of non-limiting example in reference to the accompanying drawings, wherein:

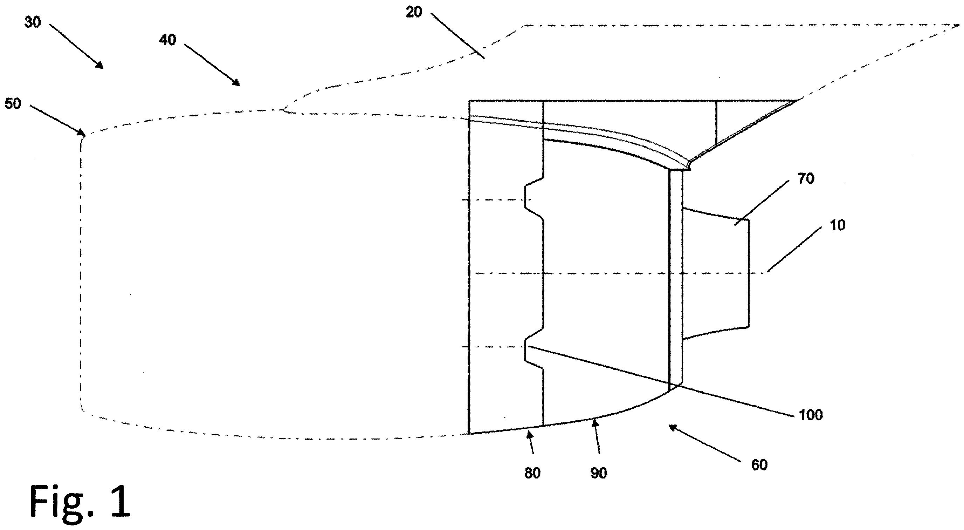

Fig. 1 is a side view of the turbofan propulsion system, according to an embodiment of the invention, with the translating structure shown in the stowed position;

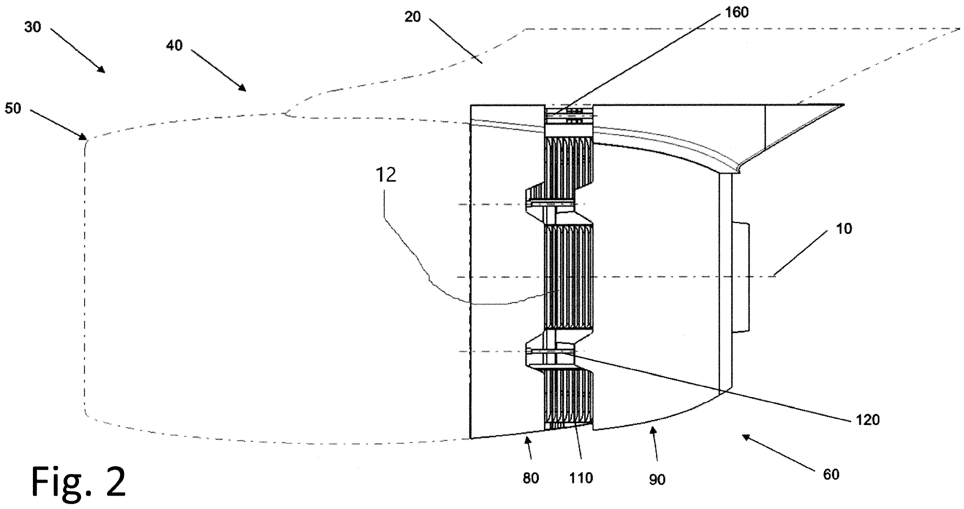

Fig. 2 is a side view of the turbofan propulsion system of Fig. 1, with the translating structure shown in the opening position;
Fig. 3 is a detailed side view in cross section of the thrust reverser system that is part of the turbofan system of Fig. 1, with the translating structure shown in the stowed position;
Fig. 4 is a detailed side view in cross section of the thrust reverser system in Fig. 3, with the translating structure shown in the opening position;
Fig. 5 is a perspective view of the turbofan propulsion system in Fig. 1, with the translating structure shown in the stowed position;
Fig. 6 is a perspective view of the turbofan propulsion system in Fig. 1, with the translating structure shown in the opening position;
Fig. 7 is a front detailed view of the iris mechanism of the thrust reverser system in Fig. 3, wherein the blades are shown in the rest configuration;
Fig. 8 is a front detailed view of the iris mechanism in Fig. 7, wherein the blades are shown in the deployed configuration;
Fig. 9A through 9D are detailed perspective views of a portion of the iris mechanism in Fig. 7 at four successive moments of movement from the rest to the deployed configuration;
Fig. 10 is a view similar to Fig. 3, but representing an embodiment wherein the inner panels are made with a thickness always greater than 5 millimeters;
Fig. 11 is a side perspective view of the turbofan propulsion system, according to an embodiment of the invention, with the translating structure shown in the opening position, wherein the translating structure and the movable structure are made as half-shells, one of which is respectively shown partially open; and
Fig. 12 is a perspective view of the turbofan propulsion system in Fig. 11 taken from another direction.

### Detailed description

In general, in the present description and the appended claims, terms such as "axial," "axial direction," "axially," and the like, refer to the direction indicated by the axis of the core engine of the turbofan propulsion system according to the invention. Similarly, terms such as "radial," "radially," "transverse," or the like refer to a direction lying in a plane substantially perpendicular to the direction of said engine axis.

In general, in the present description and the appended claims, terms such as "thrust reversal" and "thrust reverser" are to be understood as generally used in the relevant technical field, namely that of aircraft thrusters, and also include conditions, or systems designed to achieve such conditions, wherein the thrust reversal is only partial, i.e., not directed in the direction opposite to the direction of operation but also only directed in a non-axial direction relative to the thruster.

With reference to the figures, in general, the turbofan propulsion system according to an aspect of the invention is indicated by the reference numeral 30, and the thrust reverser system according to a further aspect of the invention is indicated by the reference numeral 60.

The turbofan propulsion system 30 essentially comprises a core engine 200, an engine nacelle 40, a bypass duct 430, and the thrust reverser system 60.

In a manner known per se, the core engine 200 is made as a conventional core engine of a turbofan propulsion system, so that it extends along an axial direction 10 and defines within it a first air flow path, typically a so-called "hot flow" of the turbofan propulsion system 30. Inside the core engine 200, in a conventionally known manner, there are arranged at least one compression stage, a combustion chamber, one or more expansion stages, and the exhaust nozzle 70.

The engine nacelle 40 comprises a front portion of the engine nacelle 50, downstream of which the thrust reverser system 60 is arranged.

The engine nacelle 40 is arranged at least partially around the core engine 200, and jointly defines therewith the bypass duct 430. In a manner known per se, the bypass duct 430 preferably has a cross-sectional area, in a plane transverse to the axial direction 10, that is either O-shaped or ring-shaped, or may comprise a pair of side-by-side C-shaped sections. The bypass duct 430 defines a second flow path for air, typically a so-called "cold flow" of the turbofan propulsion system 30.

The turbofan propulsion system 30 further comprises at least one fan arranged upstream of the core engine 200 and bypass duct 430 (known per se, and thus not shown in the figures) so as to provide one or more stages of compression of the incoming air flow.

As stated previously, the thrust reversal system 60 is arranged downstream of the front portion of the engine nacelle 50 and is connected thereto.

The thrust reverser system 60 comprises a fixed structure 80, which is mounted integral with the front portion of the engine nacelle 50 or is made integrally thereto, and a translating structure 90. The fixed structure 80 and the translating structure 90 are made as an ideal continuation of the front portion of the engine nacelle 50 to define therewith a flow path for air. The fixed structure 80 and the translating structure 90 are thus adapted to define therewith a sequential flow path for air. Both the fixed structure 80 and the translating structure 90 may, advantageously, be made in two portions, for example in two semi-annular halves, or in two C-shaped halves, to allow easy opening for inspection or maintenance.

The fixed structure 80 preferably has a connection ring 14 for connecting to a housing of the core engine 200 or the front portion of the engine nacelle 50, said connection ring 14 being arranged to support loads in the axial direction 10.

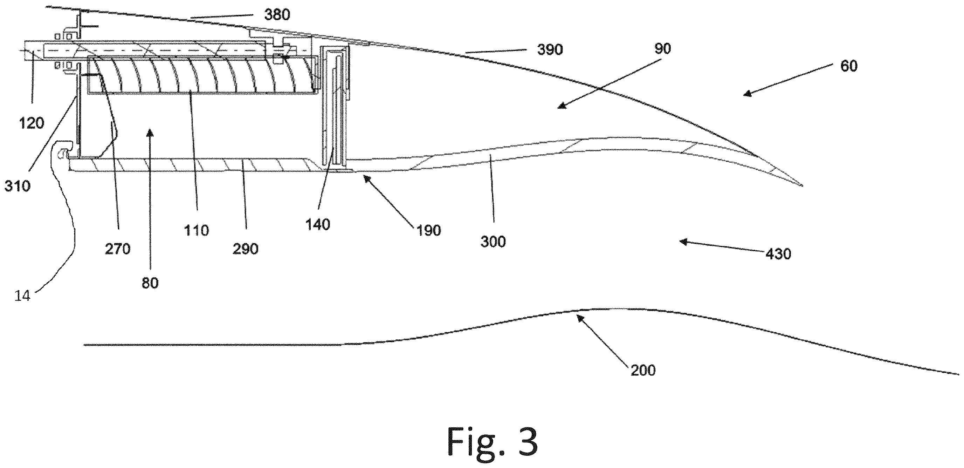

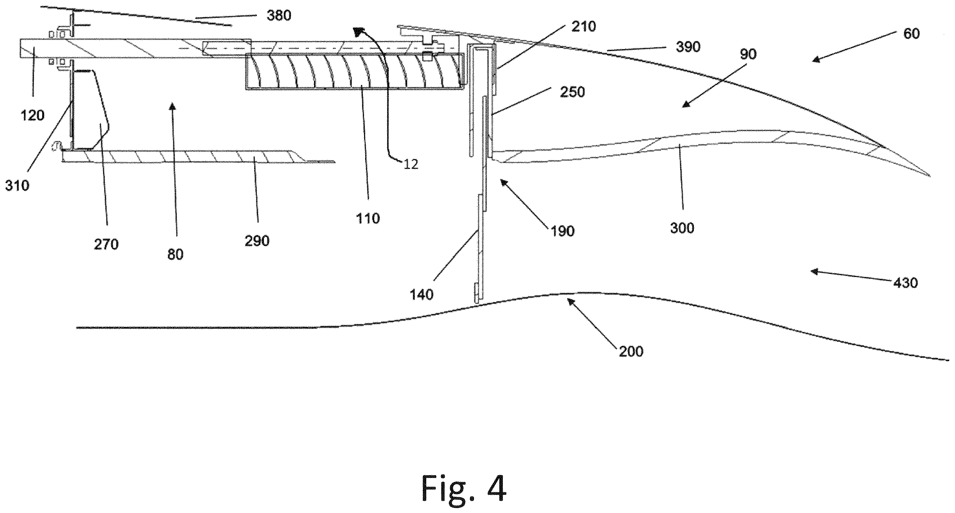

As seen in particular in Fig. 3 and 4, the fixed structure 80 may comprise a fixed outer panel 380, a fixed inner panel 290 (preferably acoustically treated), as well as a torsion box 270 that is generally known and thus not described in further detail.

The translating structure 90 may comprise, in a manner similar to the fixed structure 80, an outer translating panel 390 and an inner translating panel 300 (preferably acoustically treated).

The translating structure 90 is arranged slidable, or translatable, parallel to the axial direction 10 between a stowed position and an opening position. In the stowed position, the translating structure 90 is connected in a fluid-tight connection, advantageously by means of a dedicated gasket, with said fixed structure 80, substantially so as to define therewith, and with the front portion of the engine nacelle 50 connected thereto, a flow path for air. In the opening position, the translating structure 90 is, on the other hand, spaced apart from said fixed structure 80 in the axial direction 10. In this way, when the translating structure 90 is in the opening position, there is defined in the space between said fixed structure 80 and said translating structure 90 a circumferential opening 12, adapted to allow the outflow of air from said bypass duct 430 toward the external environment along a flow path at least partially non-parallel to the axial direction 10.

This sliding movement of the translating structure 90 with respect to the fixed structure 80 is driven by a first actuator mechanism 120, which is arranged to move the translating structure 90 from the stowed position to the opening position and vice versa. According to a preferred embodiment, said first actuator mechanism 120 comprises at least one conventional, hydraulic or electric linear actuator, preferably a pair of linear actuators, even more preferably a plurality of linear actuators, adapted to drive a translational movement along an axis of the actuator 100.

Advantageously, the thrust reverser system 60 further comprises at least one, and preferably a plurality of, outflow guides 110, also known as a "cascade." Said at least one outflow guide 110 is made, for example, as a slat, or a metal sheet. Preferably, the outflow guides 110 are arranged translationally integral with the translating structure 90, whereby, when the translating structure 90 is moved toward the opening position, said outflow guides 110 occupy at least partially the space between the translating structure 90 and the fixed structure 80, to guide the outflow of air from the bypass duct 430 to the external environment through the opening 12. Alternatively, the outflow guides 110 may be arranged integral with the fixed structure 80. Preferably, when the translating structure 90 is in the closed configuration, the outflow guides 110 are housed in a defined compartment between the fixed outer panel 380, the fixed inner panel 290, and a front frame 310.

The thrust reverser system 60 further comprises an iris mechanism 190, adapted to at least partially, and advantageously, completely, occlude the bypass duct 430; however, even in the case of "complete" occlusion of the bypass duct 430, a small air bleeding may exist in the radially innermost portion of the bypass duct 430, or the portion abutting the core engine 200, for a thickness generally less than a few millimeters. To this end, the iris mechanism 190 comprises a plurality of blades 140, said blades 140 being arranged for joint movement between a rest configuration, in which the free cross-sectional area of the bypass duct 430,or the free cross-sectional area of the bypass duct 430 in a plane substantially perpendicular or transverse to the axial direction 10, is at a maximum, and thus the blades 140 of the plurality of blades 140 jointly define an air passage; and a deployed configuration, in which the plurality of blades 140 is adapted to occlude at least partially the bypass duct 430, or said air passage, or is positioned to occlude the bypass duct 430 at least partially, and, advantageously, completely. Obviously, the invention is not limited to an iris mechanism 190 comprising the number of blades 140 shown in the figures, but may include any number of blades 140, even very different from that described or illustrated in the figures, without thereby departing from the scope of the invention as defined by the appended claims. For example, the iris mechanism 190 may include four blades, or eight blades, or even thirty-two blades, it being understood that such numbers are described herein by way of non-limiting example only.

Said iris mechanism 190 is, in the embodiment shown in the figures, mounted integral in translation with the translating structure 90 of the thrust reverser system 60. Alternatively, the iris mechanism 190 may be mounted integral with the fixed structure 80 of the thrust reverser system 60.

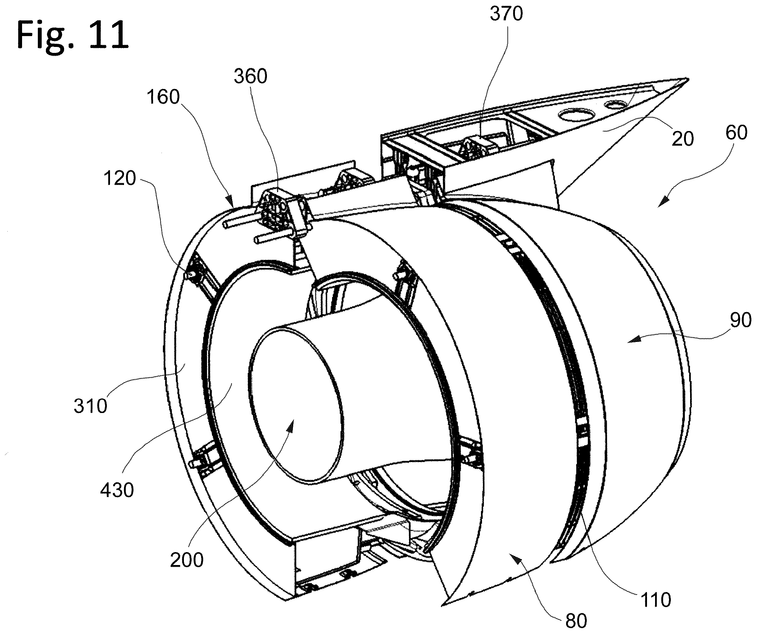

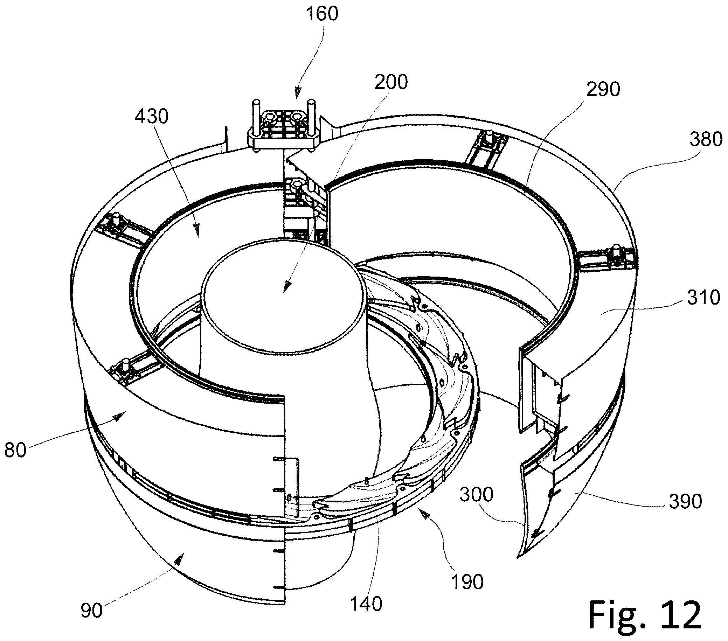

Alternatively, and more advantageously, in an embodiment, the iris mechanism 190 may be permanently constrained to the pylon coupling system 160 (which will be described later) and engageably coupled to one of either the fixed structure 80 or the translating structure 90, or it is adapted to be coupled to one of either the fixed structure 80 or the translating structure 90 to make it integral in translation with said structure. By virtue of this latter configuration, it is possible, even in the case of a bypass duct with an O-shaped or ring-shaped cross section, to arrange the plurality of blades 140 in such a way that they are adapted, in the deployed configuration, to completely occlude the passage (unless, possibly, there is a minimal leakage in the radially innermost section), and at the same time to make both the translating structure 90 and the fixed structure 80 in two half-shells, or in two portions, for example in two semi-annular halves, or in two C-shaped halves, hinged on the same side, to allow easy opening for inspection or maintenance, as shown in Fig. 11 and 12.

As may be seen in the figures, in particular in Fig. 3 and 4, said iris mechanism 190 is preferably mounted so that the plurality of blades 140 are arranged in a plane substantially perpendicular to the axial direction 10.

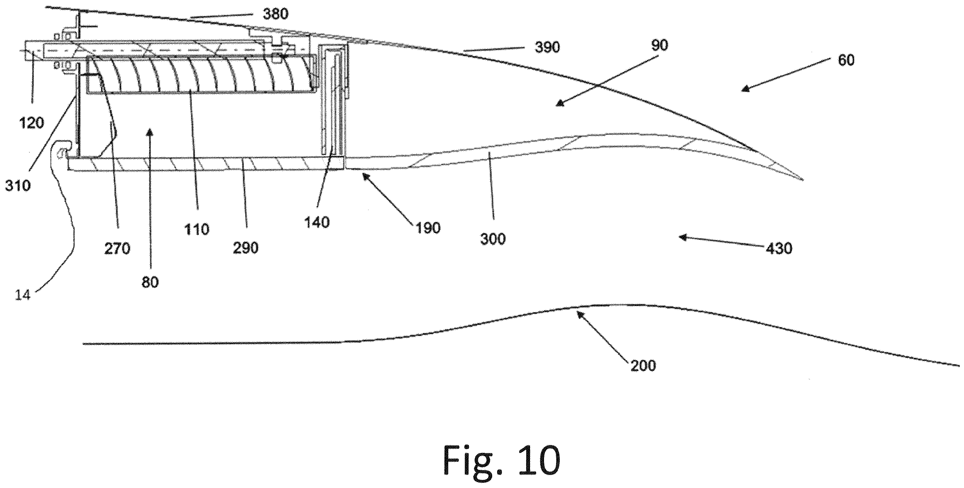

As is particularly visible in Fig. 3 and Fig. 10, advantageously, when the plurality of blades 140 is in the rest configuration, the iris mechanism 190 is arranged in a radially external position relative to the fixed inner panel 290, between the fixed inner panel 290 and the fixed outer panel 380, or it is substantially housed in the space contained between the fixed inner panel 290 and the fixed outer panel 380 of the fixed structure 80. Preferably, in this embodiment, the fixed inner panel 290 and the translating inner panel 300 face each other head-to-head, or are arranged at the same radial distance from the axial direction 10, or from the centerline of the core engine 200. Even more preferably, in such an embodiment, the fixed inner panel 290 and the translating inner panel 300 are provided with an inner sandwich structure, preferably more than 5 millimeters thick along the entire length of the panel, as visible in the embodiment shown in Fig. 10, to provide sufficient noise reduction.

Even if the blade structure 140 shown in the figures is planar, in an alternative embodiment of the invention, the blades 140 have a non-planar shape. For example, the iris mechanism 190 may be made in the form of a dome, preferably a spherical segment, and each blade 140 of the plurality of blades 140 may be made in the form of a curved panel adapted to cover only a portion of said dome. Again, in a further alternative embodiment, the iris mechanism 190 may be made in the form of a cone, having the apex of the cone oriented in the direction of, or in the direction opposite to, the airflow exit section from the bypass duct 430, in which case each blade 140 of the plurality of blades 140 of the iris mechanism 190 is made in the form of a curved panel adapted to cover a portion of said truncated cone.

In order to provide greater structural strength at least in the deployed configuration, in an advantageous embodiment, the adjacent blades 140 of the plurality of blades 140 overlap at least partially.

In order to provide greater structural strength, in a further advantageous embodiment, the blades 140 of the plurality of blades 140 of the iris mechanism 190 are made with a sandwich structure, even more preferably with a sandwich structure with composite materials. Alternatively, depending on the structural design requirements, the blades 140 may also be made as, or from, simple sheet metal structures.

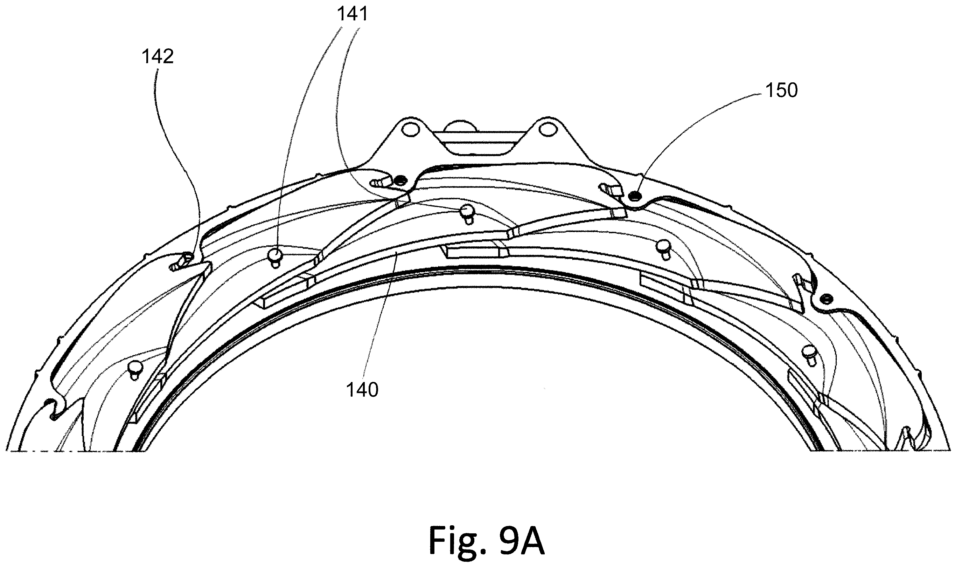

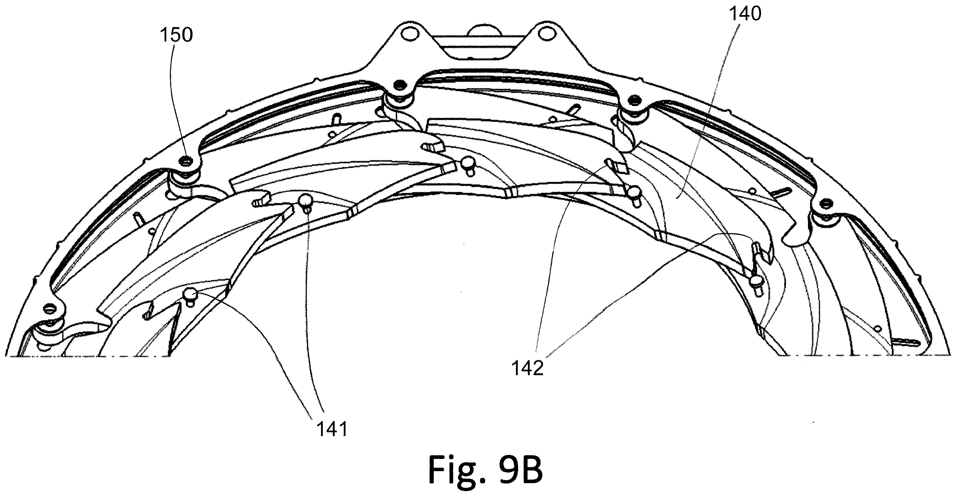

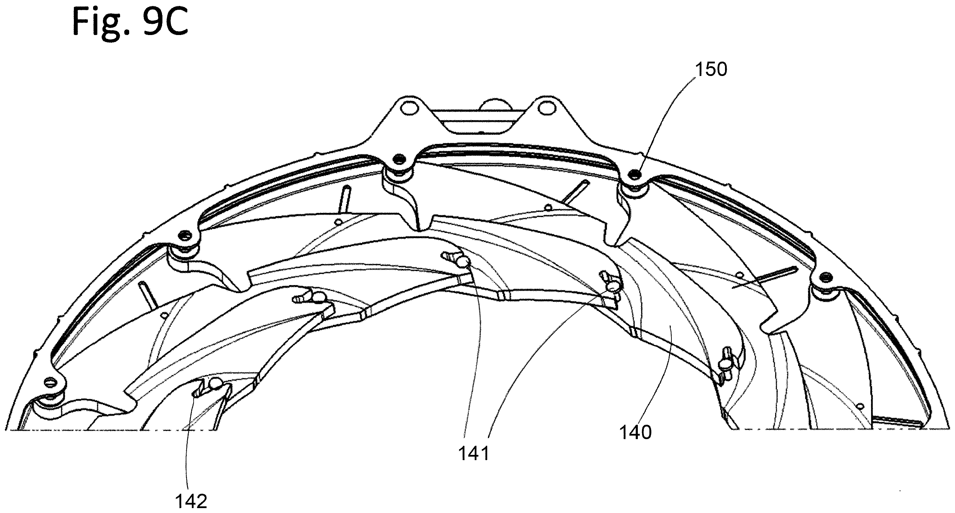

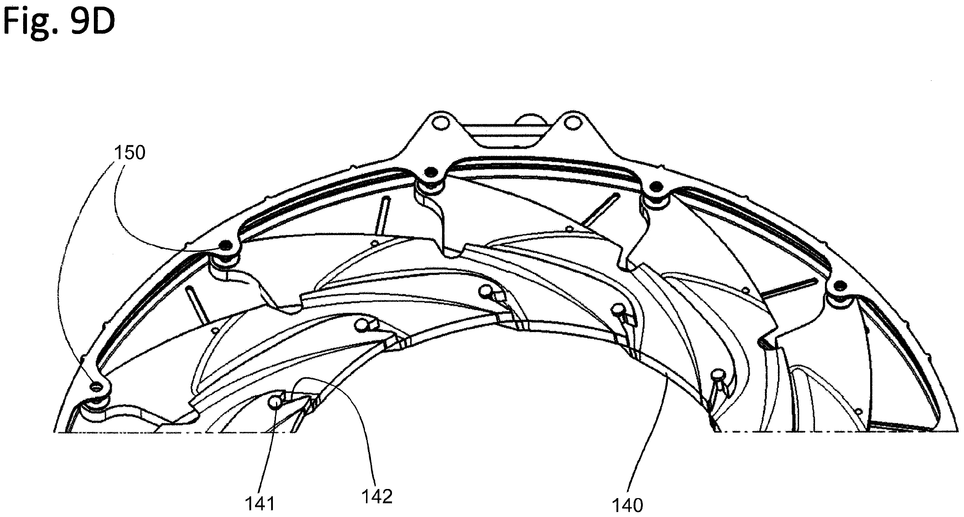

Advantageously, each blade 140 of the iris mechanism 190 may have an arrangement of pins and recesses adapted to cooperate with a similar arrangement of blades 140 directly adjacent thereto, in such a way to allow locking adjacent blades 140 in the deployed configuration, with obvious advantages in terms of structural strength. In particular, as may be seen clearly in Fig. 9A through 9D, each blade 140 may include a pin 141 and a recess 142, which are arranged to cooperate with a recess 142 and a pin 141 of an adjacent blade, respectively. The position on each blade 140 of the pin 141 and the recess 142 is such that, when the iris mechanism 190 reaches a configuration with the plurality of fully deployed blades 140 (visible in Fig. 9D), the relative position of a pair of adjacent blades 140 ends up locked by the interlocking of the pin 141 of one in the recess 142 of the other one.

Advantageously, at least one blade 140 of the plurality of blades 140 of the iris mechanism has a control hole, which is adapted to allow controlling the aerodynamic transient during the movement of the iris mechanism 190 between the rest configuration and the deployed configuration.

In an embodiment, at least one blade 140 of the plurality of blades 140 of the iris mechanism has a service hole adapted to allow wiring or other structures or installations to pass through.

To drive the joint movement of the plurality of blades 140 of the iris mechanism 190 from the rest configuration to the deployed configuration, and vice versa, the thrust reverser system 60 further comprises a second actuator mechanism 170.

According to the invention, the first actuator mechanism 120 and the second actuator mechanism 170 are arranged for coordinated drive such that:
- when the translating structure 90 of the thrust reverser system 60 is in the stowed position, the plurality of blades 140 of the iris mechanism 190 is in the rest configuration; and
- when the translating structure 90 of the thrust reverser system 60 is in the opening position, the plurality of blades 140 of the iris mechanism 190 is in the deployed configuration.

In an even more preferred embodiment of the invention, the first actuator mechanism 120 and the second actuator mechanism 170 are arranged for synchronized actuation such that the movement of the first actuator mechanism 120 causes the concurrent movement of the second actuator mechanism 170, and, consequently, the movement of the translating structure 90 of the thrust reverser system 60 from the stowed position to the opening position is matched by the similar movement of the plurality of blades 140 of the iris mechanism 190 from the rest configuration to the deployed configuration, and vice versa.

As may also be inferred from a comparison between Fig. 3 and Fig. 4, the length along the axial direction 10 of the fixed inner panel 290 and the fixed outer panel 380 is approximately equal to or nearly equal to (or at least on the same order of magnitude as) the stroke of the first actuator mechanism 120, or to the length in the axial direction of the opening 12 defined between the translating structure 90 and the fixed structure 80 when the translating structure 90 is in the opening position.

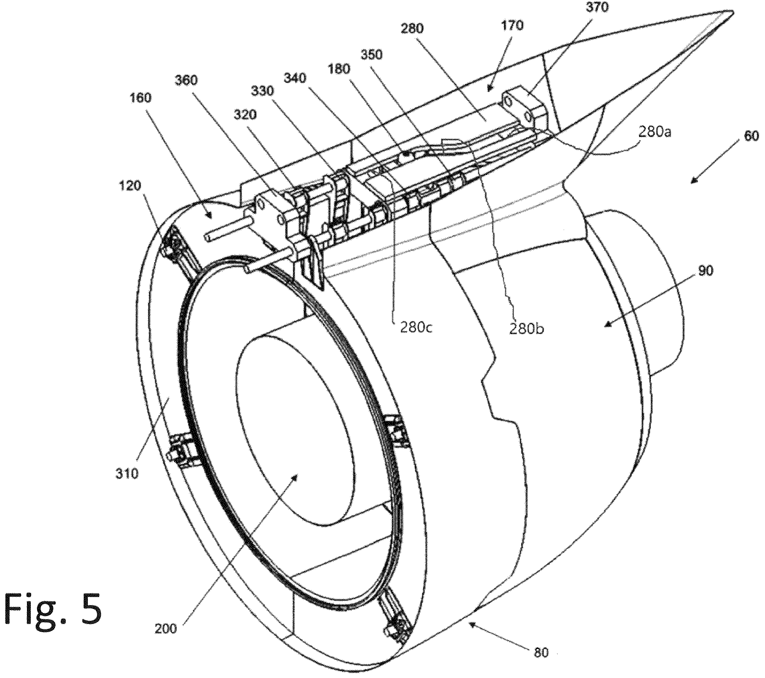

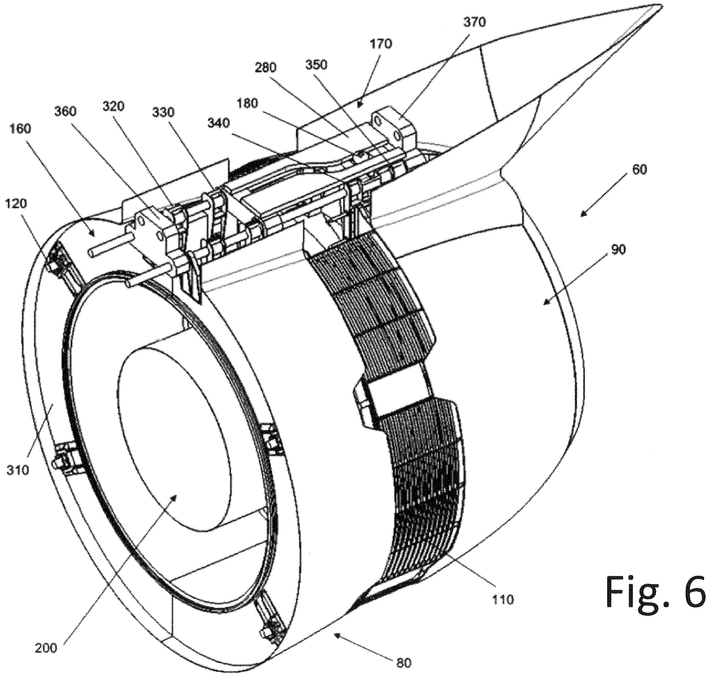

According to the invention, the first actuator mechanism 120 comprises a runner 280 and a pin 180. The runner 280 has a first portion 280a extending parallel to said axial direction 10, and a second portion 280b extending non-parallel to said first portion 280a from said first portion 280a, as a continuation thereof. The pin 180, which may also be made in the form of a roller, is arranged integral in translation with the translating structure 90 of the thrust reverser system 60 and is mounted slidable inside the runner 280. The second actuator mechanism 170 comprises an actuation ring 250 adapted to rotatably draw said plurality of blades 140 of the iris mechanism 190 between said rest configuration and said deployed configuration. In this way, the pin 180 is arranged to rotatably draw said actuation ring 250 when the pin 180 is slid within said second portion 280b of said runner 280, for example when it is moved along the axial direction 10 by the action of the first actuator mechanism 120, and in particular of a linear actuator preferably part of said first actuator mechanism 120. Preferably, the runner 280 further comprises a third portion 280c, extending along a direction parallel to, and spaced apart from, said first portion 280a, from said second portion 280b, as a continuation thereof. In this way, the pin 180 may reach a locked end position when it has reached the end portion 280, or the third portion 280c of the runner 280, while ensuring that the angular position of the actuation ring 250, which defines the rest or deployed configuration of the plurality of blades 140, is stably maintained. Obviously, in an equivalent way, the second portion 280b of the runner 280 may also not be straight, and extend, for example, along a curve or a circumferential arc. Similarly, although in Fig. 5 and 6 the runner 280 shown extends entirely in a plane, it is also possible for the runner 280 to be spatially curved, for example at least in such a way that the first portion 280a and the second portion 280b extend over an ideally curved surface, for example a portion of a cylinder having its longitudinal axis coincident with the axial direction 10, in such a way as to allow a longer stroke of the pin 180 along the circumferential direction, and, consequently, to allow a wider angle of rotation for the actuation ring 250.

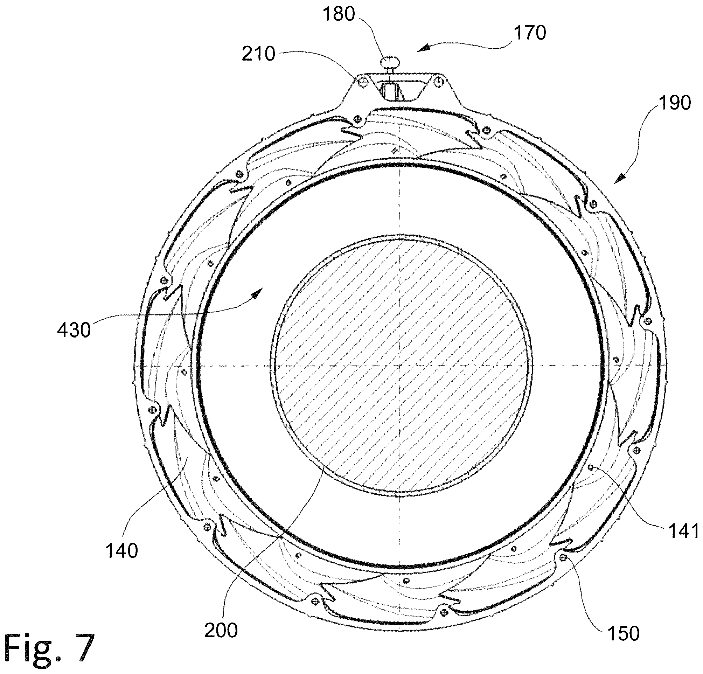

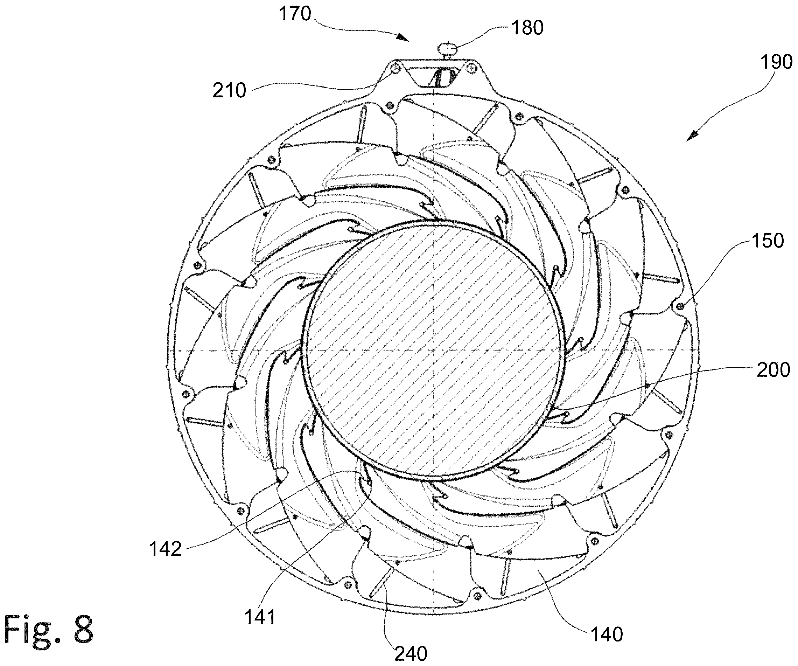

As shown in detail in Fig. 7, 8 and 9A through 9D, the iris mechanism 190 comprises, in addition to said actuation ring 250, a fixed ring 210. Each blade 140 of the plurality of blades 140 is hinged on a respective hinge 150 so as to be constrained to the fixed ring 210. A plurality of blade guides 230 are formed on the actuation ring 250, each associated with a respective blade 140.

The iris mechanism 190 further comprises a plurality of actuation pins 240, each actuation pin 240 being mounted slidably in a respective blade guide 230 and mounted integral with a respective blade 140.

Thus, as is evident to the person skilled in the art, the rotation of the actuation ring 250 about the axial direction 10, caused by the second actuator mechanism 170, corresponds to a rotation of each blade 140 of the plurality of blades 140 about the respective hinge 150. The joint and complete rotation of the plurality of blades 140 causes the iris mechanism to move between the aforementioned two rest and deployment configurations.

In a manner known per se, the turbofan propulsion system 30 may be coupled to an aircraft wing for support by means of a pylon 20. Said pylon 20 defines within it a cavity, in which, preferably, said runner 280 is fully accommodated.

Within said cavity of the pylon 20 is also housed a system for coupling to the pylon 160, adapted to suspend the thrust reverser system 60 to the pylon 20, and to allow at least a translational movement, along a direction parallel to the axial direction 10, of the translating structure 90 of the thrust reverser system 60 and of the components of the system integral to the structure.

The pylon coupling system 160 is constrained to the pylon 20 through fixed interfaces provided by a front pylon coupling 360 and a rear pylon coupling 370. The fixed structure 80 is constrained to the pylon coupling system 160 by means of a first hinge of the fixed structure 320 and a second hinge of the fixed structure 330. The translating structure 90 is constrained to the pylon coupling system 160 by means of a first hinge of the translating structure 340 and a second hinge of the translating structure 350. The iris mechanism 190 may be, in a non-limiting example, constrained to cylindrical guides of the pylon coupling system 160 so as to slide freely along them.

As mentioned previously, a method for reversing the thrust of the turbofan propulsion system 30 of an aircraft forms part of the invention. The method is applicable to the turbofan propulsion system 30 according to the invention, and comprises the steps of:
a) driving the sliding movement of the translating structure 90 of the thrust reverser system 60 from the stowed position to the opening position, so as to define said circumferential opening 12 between the translating structure 90 and the fixed structure 80, said opening 12 being adapted to allow the outflow of air from said bypass duct 430 to the external environment;
b) driving the joint movement of the plurality of blades 140 of the iris mechanism 190 from the rest configuration to the deployed configuration to arrange the plurality of blades 140 in such a way that said bypass duct 430 is at least partially occluded.

The sliding movement of the translating structure 90 of the thrust reverser system 60 of said step a) and the joint movement of the plurality of blades 140 of the iris mechanism 190 of said step b) are performed in a coordinated manner. In this way, it is ensured that:
- when the translating structure 90 of the thrust reverser system 60 is in the stowed position, the plurality of blades 140 of the iris mechanism 190 is in the rest configuration; and
- when the translating structure 90 of the thrust reverser system 60 is in the opening position, the plurality of blades 140 of the iris mechanism 190 is in the deployed configuration.

In a more preferable embodiment of the method according to the latter further aspect of the invention, the movement of the first actuator mechanism 120 and the movement of the second actuator mechanism 170 are performed synchronously so that the movement of the translating structure 90 of the thrust reverser system 60 from the stowed position to the opening position is matched by the similar movement of the plurality of blades 140 of the iris mechanism 190 from the rest configuration to the deployed configuration, and vice versa.

As may be seen from the foregoing description, due to the thrust reverser system and the related turbofan propulsion system according to the invention, the objects of the above-described invention may be fully achieved, resulting in several advantages.

In particular, the invention provides a thrust reverser system improved with respect to the prior art.

Firstly, by virtue of the configuration of the iris mechanism, the thrust reverser system may occlude the bypass duct in the best way possible and reduce any airflow leakage to a minimum, or substantially to zero.

Further, by virtue of the advantageous ability to actuate in a coordinated, and even more preferably synchronized, manner, the movement of the translating structure of the thrust reverser system between the stowed and opening positions and the joint movement of the blades of the plurality of blades of the iris mechanism between the rest and deployed configurations, a more precise and better-timed thrust reversal effect may be achieved than in the prior art.

In addition, the reduction of the number of components, the number and complexity of aerodynamic discontinuities, and, most importantly, the weight of the thrust reverser system benefits the production, maintenance, and operation costs of a turbofan propulsion system, and allows for a significant reduction in the noise emission of such a propulsion system compared to the prior art by virtue of the increase in acoustically treatable surface area.

Moreover, such a configuration makes it possible to comply with safety requirements regarding unintentional actuation of the thrust reverser system. Indeed, by virtue of the configuration of the iris mechanism and the first actuator mechanism and the second actuator mechanism, it is easy for the person skilled in the art to integrate locking mechanisms in both the first and second actuator mechanisms, as well as in the fixed ring of the iris mechanism or in the runner or pin operatively connected thereto (in a way that is known per se and therefore not shown).

In addition, the possibility of accommodating the guide and the pylon coupling system entirely within a hollow space obtained inside the pylon connecting the turbofan propulsion system to the aircraft wing allows the aerodynamic shape of the engine nacelle to be improved and facilitates maintenance operations.

Lastly, constraining the iris mechanism permanently to the pylon coupling system and engageably to one of the fixed and translating structures makes it possible to simultaneously create a 360° iris mechanism, or one capable of occluding a bypass duct with an O-shaped or ring-shaped cross section, and, at the same time, to create both the translating and fixed structures in two half-shells, or in two portions, for example in two half-annular halves, or in two C-shaped halves, to facilitate opening for inspection or maintenance, as shown in Fig. 11 and 12.

Without prejudice to the principle of the invention, the embodiments and the details of construction may be widely varied with respect to that which has been described and illustrated purely by way of non-limiting example, without thereby departing from the scope of the invention as defined by the appended claims.

## Claims

1. Thrust reverser system (60) for a turbofan propulsive assembly (30) of an aircraft, the thrust reverser system (60) comprising:
- a fixed structure (80) and a translating structure (90) adapted to define internally a sequential flow path for air, the translating structure (90) being arranged slidable along an axial direction (10) between a stowed position, wherein the translating structure (90) is sealingly connected to said fixed structure (80), and an open position, wherein the translating structure (90) is spaced apart from said fixed structure (80) in the axial direction (10) so as to define a circumferential opening (12) between said translating structure (90) and said fixed structure (80), said opening (12) being adapted to allow the outflow of air towards the external environment;
- an iris mechanism (190), comprising a plurality of blades (140) jointly movable between a rest configuration, wherein they jointly define a passage for air, and a deployed configuration wherein said plurality of blades (140) is adapted to at least partially occlude said passage;
- a first actuator mechanism (120) adapted to drive the sliding movement of the translating structure (90) between said stowed position and said opening position;
- a second actuator mechanism (170) adapted to drive the movement of said plurality of blades (140) of the iris mechanism (190) between said rest configuration and said deployed configuration;
wherein the first actuator mechanism (120) and the second actuator mechanism (170) are arranged for coordinated drive in such a way that:
- when said translating structure (90) is in said stowed position, said plurality of blades (140) of the iris mechanism (190) is in said rest configuration;
- when said translating structure (90) is in said opening position, said plurality of blades (140) of the iris mechanism (190) is in said deployed configuration
wherein the first actuator mechanism (120) comprises:
- a runner (280), having a first portion (280a) extending parallel to said axial direction (10), and a second portion (280b) extending non-parallel to said first portion (280a) starting from said first portion (280a); and
- a pin (180) connected for translation with said translating structure (90), the pin (180) being arranged slidable inside said runner (280);
wherein the second actuator mechanism (170) comprises:
- an actuation ring (250) adapted to drive in rotation said plurality of blades (140) of the iris mechanism (190) between said rest configuration and said deployed configuration, and vice versa;
wherein said pin (180) is arranged to drag into rotation said actuation ring (250) when the pin (180) is slid inside said second portion (280b) of said runner (280).

2. Thrust reverser system according to claim 1, wherein the plurality of blades (140) is adapted, in the deployed configuration, to completely occlude said passage.

3. Thrust reverser system according to claim 1 or claim 2, wherein the blades (140) of the plurality of blades (140) of the iris mechanism (190) are made with a sandwich structure.

4. Thrust reverser system according to any of the preceding claims, wherein the blades (140) of the plurality of blades (140) of the iris mechanism (190) have a non-planar shape, for example wherein the iris mechanism (190) is made in the form of a dome, preferably a spherical dome, and each blade (140) of the plurality of blades (140) of the iris mechanism (190) is made in the form of a curved panel adapted to cover a portion of said dome.

5. Thrust reverser system according to claim 4, wherein the iris mechanism (190) is made in the form of a truncated cone and each blade (140) of the plurality of blades (140) of the iris mechanism (190) is made in the form of a curved panel adapted to cover a portion of said truncated cone.

6. A thrust reverser system according to any of claims 1 to 3, wherein the plurality of blades (140) of the iris mechanism (190) is arranged in a plane substantially perpendicular to said axial direction (10).

7. Thrust reverser system according to any of the preceding claims, wherein each blade (140) of the iris mechanism (190) has at least one pin (141) and one recess (142) each adapted to cooperate with a recess (142) and pin (141) of adjacent blades, respectively, so that, in the deployed configuration, the relative position of the blades (140) is locked.

8. Thrust reverser system according to any of the preceding claims, further comprising a plurality of outflow guides (110), connected for translation with the translating structure (90), and adapted to guide the outflow of air towards the external environment through said circumferential opening (12) defined between said translating structure (90) and said fixed structure (80) when the translating structure (90) is in said opening position.

9. Turbofan propulsion system (30) for an aircraft, the turbofan propulsive system (30) comprising:
- a core engine (200), extending along an axial direction (10), and adapted to define, internally, a first flow path for air;
- an engine nacelle (40), arranged at least partially around the core engine (200), and comprising a front portion of the engine nacelle (50);
- a bypass duct (430), comprised between the core engine (200) and the engine nacelle (40) and adapted to define a second flow path for air; and
- a thrust reverser system (60) according to any of the preceding claims, the thrust reverser system (60) being arranged downstream the front portion of the engine nacelle (50) of the engine nacelle (40), and the fixed structure (80) of the thrust reverser system (60) being arranged connected to said front portion of the engine nacelle (50).

10. Turbofan propulsion system according to claim 9, wherein the blades (140) of the plurality of blades (140) in the rest configuration allow air to pass into the bypass duct (430), and in the deployed configuration occlude at least partially said air passage into the bypass duct (430).

11. Turbofan propulsion system according to claim 10, wherein said bypass duct (230), in a cross-sectional plane transverse to the axial direction (10), has a ring- or O-shaped cross section, and wherein said iris mechanism (190) is arranged coaxially to said bypass duct (430) whereby the plurality of blades (140) is adapted, in the deployed configuration, to completely occlude said bypass duct (430).

12. Turbofan propulsion system according to any of claims 9 to 11, further comprising a pylon (20), adapted to support said turbofan propulsion system (30) by means of the connection of said engine nacelle (40) to a wing of said aircraft, **characterized in that** said guide (280) is entirely accommodated within said pylon (20).

13. A turbofan propulsion system according to any of claims 9 to 11, further comprising:
- a pylon (20), adapted to support said turbofan propulsion system (30) by connecting said engine nacelle (40) to a wing of said aircraft;
- a pylon coupling system (160) adapted to suspend the thrust reverser system (60) to the pylon (20) and to allow a translation movement along a direction parallel to the axial direction (10) of the translating structure (90) of the thrust reverser system (60);
wherein the iris mechanism (190) is permanently constrained to the pylon coupling system (160) and is adapted to be connected to one of either the fixed structure (80) or the translating structure (90) for translation with the latter.

14. A turbofan propulsion system according to any of claims 9 to 13, wherein the fixed structure (80) comprises a fixed outer panel (380) and a fixed inner panel (290), and wherein, when the plurality of blades (140) are in the rest configuration, the iris mechanism (190) is arranged in a radially external position relative to the fixed inner panel (290) between the fixed inner panel (290) and the fixed outer panel (380).

15. Thrust reversal method for a turbofan propulsion assembly (30) according to any claim from 9 to 14, comprising the steps of:
a) driving the sliding movement of said translating structure (90) of the thrust reverser system (60) from said stowed position to said opening position, so as to define a circumferential opening (12) between said translating structure (90) and said fixed structure (80), said opening (12) being adapted to allow the outflow of air from said bypass duct (430) toward the external environment;
b) driving the joint movement of said plurality of blades (140) of the iris mechanism (190) from said rest configuration to said deployed configuration to arrange said plurality of blades (140) in such a way that they at least partially occlude said bypass duct (430).

## Patentansprüche

1. Schubumkehrsystem (60) für eine Turbogebläsetriebsanordnung (30) eines Flugzeugs, wobei das Schubumkehrsystem (60) aufweist:
- eine feststehende Struktur (80) und eine Translationsstruktur (90), die ausgelegt ist, im Inneren einen sequenziellen Strömungsweg für Luft zu definieren, wobei die Translationsstruktur (90) entlang einer axialen Richtung (10) zwischen einer verstauten Position, wobei die Translationsstruktur (90) mit der feststehenden Struktur (80) abdichtend verbunden ist, und einer offenen Position, wobei die Translationsstruktur (90) von der feststehenden Struktur (80) in der axialen Richtung (10) so beabstandet ist, dass eine Umfangsöffnung (12) zwischen der Translationsstruktur (90) und der feststehenden Struktur (80) definiert ist, verschiebbar angeordnet ist, wobei die Öffnung (12) ausgelegt ist, das Ausströmen von Luft in Richtung der äußeren Umgebung zu ermöglichen;
- einen Blendenmechanismus (190), der eine Vielzahl von Lamellen (140) aufweist, die gemeinsam zwischen einer Ruhekonfiguration, wobei sie gemeinsam einen Durchgang für Luft definieren, und einer entfalteten Konfiguration, wobei die Vielzahl von Lamellen (140) ausgelegt ist, den Durchgang zumindest teilweise zu verschließen, bewegbar sind;
- einen ersten Betätigungsmechanismus (120), der ausgelegt ist, die Verschiebebewegung der Translationsstruktur (90) zwischen der verstauten Position und der Öffnungsposition anzutreiben;
- einen zweiten Betätigungsmechanismus (170), der ausgelegt ist, die Bewegung der Vielzahl von Lamellen (140) des Blendenmechanismus (190) zwischen der Ruhekonfiguration und der entfalteten Konfiguration anzutreiben;
wobei der erste Betätigungsmechanismus (120) und der zweite Betätigungsmechanismus (170) für einen koordinierten Antrieb in einer solchen Weise angeordnet sind, dass:
- wenn sich die Translationsstruktur (90) in der verstauten Position befindet, sich die Vielzahl von Lamellen (140) des Blendenmechanismus (190) in der Ruhekonfiguration befindet;
- wenn sich die Translationsstruktur (90) in der Öffnungsposition befindet, sich die Vielzahl von Lamellen (140) des Blendenmechanismus (190) in der entfalteten Konfiguration befindet,
wobei der erste Betätigungsmechanismus (120) aufweist:
- einen Läufer (280) mit einem ersten Abschnitt (280a), der sich parallel zu der axialen Richtung (10) erstreckt, und einem zweiten Abschnitt (280b), der sich nichtparallel zu dem ersten Abschnitt (280a) ausgehend von dem ersten Abschnitt (280a) erstreckt; und
- einen Stift (180), der zur Translation mit der Translationsstruktur (90) verbunden ist, wobei der Stift (180) innerhalb des Läufers (280) verschiebbar angeordnet ist;
wobei der zweite Betätigungsmechanismus (170) aufweist:
- einen Betätigungsring (250), der ausgelegt ist, die Vielzahl von Lamellen (140) des Blendenmechanismus (190) zwischen der Ruhekonfiguration und der entfalteten Konfiguration und umgekehrt in Drehung zu versetzen;
wobei der Stift (180) angeordnet ist, um den Betätigungsring (250) in Drehung zu mitzunehmen, wenn der Stift (180) innerhalb des zweiten Abschnitts (280b) des Läufers (280) verschoben wird.

2. Schubumkehrsystem nach Anspruch 1, wobei die Vielzahl von Lamellen (140) in der entfalteten Konfiguration den Durchgang vollständig verschließen.

3. Schubumkehrsystem nach Anspruch 1 oder 2, wobei die Lamellen (140) der Vielzahl von Lamellen (140) des Blendenmechanismus (190) mit einer Sandwichstruktur hergestellt sind.

4. Schubumkehrsystem nach einem der vorhergehenden Ansprüche, wobei die Lamellen (140) der Vielzahl von Lamellen (140) des Blendenmechanismus (190) eine nichtebene Form aufweisen, zum Beispiel wobei der Blendenmechanismus (190) in Form einer Kuppel, vorzugsweise einer sphärischen Kuppel, hergestellt ist und jede Lamelle (140) der Vielzahl von Lamellen (140) des Blendenmechanismus (190) in Form einer gekrümmten Platte hergestellt ist, die ausgelegt ist, einen Abschnitt der Kuppel abzudecken.

5. Schubumkehrsystem nach Anspruch 4, wobei der Blendenmechanismus (190) in Form eines Kegelstumpfs ausgebildet ist und jede Lamelle (140) der Vielzahl von Lamellen (140) des Blendenmechanismus (190) in Form einer gekrümmten Platte hergestellt ist, die ausgelegt ist, einen Abschnitt des Kegelstumpfs abzudecken.

6. Schubumkehrsystem nach einem der Ansprüche 1 bis 3, wobei die Vielzahl von Lamellen (140) des Blendenmechanismus (190) in einer Ebene angeordnet ist, die im Wesentlichen senkrecht zu der axialen Richtung (10) verläuft.

7. Schubumkehrsystem nach einem der vorhergehenden Ansprüche, wobei jede Lamelle (140) des Blendenmechanismus (190) mindestens einen Stift (141) und eine Aussparung (142) aufweist, die ausgelegt sind, mit einer Aussparung (142) bzw. einem Stift (141) benachbarter Lamellen zusammenzuwirken, sodass in der entfalteten Konfiguration die relative Position der Lamellen (140) verriegelt ist.

8. Schubumkehrsystem nach einem der vorangehenden Ansprüche, ferner aufweisend eine Vielzahl von Ausströmungsführungen (110), die zur Translation mit der Translationsstruktur (90) verbunden ausgelegt sind, das Ausströmen von Luft durch die zwischen der Translationsstruktur (90) und der feststehenden Struktur (80) definierten Umfangsöffnung (12) in Richtung der äußeren Umgebung zu führen, wenn sich die Translationsstruktur (90) in der Öffnungsposition befindet.

9. Turbogebläsetriebssystem (30) für ein Flugzeug, wobei das Turbogebläsetriebssystem (30) aufweist:
- ein Kerntriebwerk (200), das sich entlang einer axialen Richtung (10) erstreckt und ausgelegt ist, im Inneren einen ersten Strömungsweg für Luft zu definieren;
- eine Triebwerksgondel (40), die zumindest teilweise um das Kerntriebwerk (200) herum angeordnet ist und einen vorderen Abschnitt der Triebwerksgondel (50) aufweist;
- einen Bypass-Kanal (430), der zwischen dem Kerntriebwerk (200) und der Triebwerksgondel (40) angeordnet und ausgelegt ist, einen zweiten Strömungsweg für Luft zu definieren; und
- ein Schubumkehrsystem (60) nach einem der vorhergehenden Ansprüche, wobei das Schubumkehrsystem (60) stromabwärts des vorderen Abschnitts der Triebwerksgondel (50) der Triebwerksgondel (40) angeordnet ist und die feststehende Struktur (80) des Schubumkehrsystems (60) mit dem vorderen Abschnitt der Triebwerksgondel (50) verbunden angeordnet ist.

10. Turbogebläsetriebssystem nach Anspruch 9, wobei die Lamellen (140) der Vielzahl von Lamellen (140) in der Ruhekonfiguration Luft in den Bypass-Kanal (430) gelangen lassen und in der entfalteten Konfiguration den Luftdurchgang in den Bypass-Kanal (430) zumindest teilweise verschließen.

11. Turbogebläsetriebssystem nach Anspruch 10, wobei der Bypass-Kanal (230) in einer Querschnittsebene quer zu der axialen Richtung (10) einen ring- oder O-förmigen Querschnitt aufweist und wobei der Blendenmechanismus (190) koaxial zu dem Bypass-Kanal (430) angeordnet ist, wodurch die Vielzahl von Lamellen (140) in der entfalteten Konfiguration ausgelegt ist, den Bypass-Kanal (430) vollständig zu verschließen.

12. Turbogebläsetriebssystem nach einem der Ansprüche 9 bis 11, ferner aufweisend einen Pylon (20), der ausgelegt ist, das Turbogebläsetriebssystem (30) mittels der Verbindung der Triebwerksgondel (40) mit einem Flügel des Flugzeugs zu tragen, **dadurch gekennzeichnet, dass** die Führung (280) vollständig in dem Pylon (20) untergebracht ist.

13. Turbogebläsetriebssystem nach einem der Ansprüche 9 bis 11, ferner aufweisend:
- einen Pylon (20), der ausgelegt ist, das Turbogebläsetriebssystem (30) zu tragen, indem er die Triebwerksgondel (40) mit einem Flügel des Flugzeugs verbindet;
- ein Pylon-Kupplungssystem (160), das ausgelegt ist, das Schubumkehrsystem (60) an dem Pylonen (20) aufzuhängen und eine Translationsbewegung entlang einer Richtung parallel zu der axialen Richtung (10) der Translationsstruktur (90) des Schubumkehrsystems (60) zu ermöglichen;
wobei der Blendenmechanismus (190) permanent an das Pylon-Kopplungssystem (160) gebunden ist und ausgelegt ist, entweder mit der feststehenden Struktur (80) oder mit der Translationsstruktur (90) zur Translation mit der Letzteren verbunden zu sein.

14. Turbogebläsetriebssystem nach einem der Ansprüche 9 bis 13, wobei die feststehende Struktur (80) eine feststehende äußere Platte (380) und eine feststehende innere Platte (290) aufweist und wobei wenn sich die Vielzahl von Lamellen (140) in der Ruhekonfiguration befinden, der Blendenmechanismus (190) in einer radial äußeren Position relativ zu der feststehenden inneren Platte (290) zwischen der feststehenden inneren Platte (290) und der feststehenden äußeren Platte (380) angeordnet ist.

15. Schubumkehrverfahren für eine Turbogebläsetriebsanordnung (30) nach einem der Ansprüche 9 bis 14, umfassend die Schritte:
a) Antreiben der Verschiebebewegung der Translationsstruktur (90) des Schubumkehrsystems (60) aus der verstauten Position in die Öffnungsposition, um eine Umfangsöffnung (12) zwischen der Translationsstruktur (90) und der feststehenden Struktur (80) zu definieren, wobei die Öffnung (12) ausgelegt ist, das Ausströmen von Luft aus dem Bypass-Kanal (430) in Richtung der äußeren Umgebung zu ermöglichen;
b) Antreiben der gemeinsamen Bewegung der Vielzahl von Lamellen (140) des Blendenmechanismus (190) aus der Ruhekonfiguration in die entfaltete Konfiguration, um die Vielzahl von Lamellen (140) derart anzuordnen, dass sie den Bypass-Kanal (430) zumindest teilweise verschließen.

## Revendications

1. Système inverseur de poussée (60) pour un ensemble propulsion de turboréacteur (30) d'un aéronef, le système inverseur de poussée (60) comprenant :
- une structure fixe (80) et une structure de translation (90) adaptées pour définir intérieurement un chemin d'écoulement séquentiel pour l'air, la structure de translation (90) étant agencée coulissante le long d'une direction axiale (10) entre une position repliée dans laquelle la structure de translation (90) est reliée de manière étanche à ladite structure fixe (80), et une position ouverte dans laquelle la structure de translation (90) est espacée de ladite structure fixe (80) dans la direction axiale (10), de manière à définir une ouverture (12) circonférentielle entre ladite structure de translation (90) et ladite structure fixe (80), ladite ouverture (12) étant adaptée pour permettre l'écoulement à la sortie de l'air vers l'environnement extérieur ;
- un mécanisme d'iris (190), comprenant une pluralité de pales (140) mobiles conjointement entre une configuration de repos dans laquelle elles définissent conjointement un passage pour l'air, et une configuration déployée dans laquelle ladite pluralité de pales (140) est adaptée pour obstruer au moins partiellement ledit passage ;
- un premier mécanisme actionneur (120) adapté pour entraîner le mouvement coulissant de la structure de translation (90) entre ladite position repliée et ladite position d'ouverture ;
- un deuxième mécanisme actionneur (170) adapté pour entraîner le mouvement de ladite pluralité de pales (140) du mécanisme d'iris (190) entre ladite configuration de repos et ladite configuration déployée ;
dans lequel le premier mécanisme actionneur (120) et le deuxième mécanisme actionneur (170) sont agencés pour un entraînement coordonné de manière à ce que :
- lorsque ladite structure de translation (90) est dans ladite position repliée, ladite pluralité de pales (140) du mécanisme d'iris (190) est dans ladite configuration de repos ;
- lorsque ladite structure de translation (90) est dans ladite position d'ouverture, ladite pluralité de pales (140) du mécanisme d'iris (190) est dans ladite configuration déployée ;
dans lequel le premier mécanisme actionneur (120) comprend :
- un patin (280), ayant une première partie (280a) s'étendant parallèlement à ladite direction axiale (10), et une deuxième partie (280b) s'étendant non parallèlement à ladite première partie (280a) à partir de ladite première partie (280a) ; et
- une broche (180) reliée à ladite structure de translation (90) pour translation, la broche (180) étant agencée coulissante à l'intérieur dudit patin (280) ;
dans lequel le deuxième mécanisme actionneur (170) comprend :
- un anneau d'actionnement (250) adapté pour entraîner en rotation ladite pluralité de pales (140) du mécanisme d'iris (190) entre ladite configuration de repos et ladite configuration déployée, et vice versa ;
dans lequel ladite broche (180) est agencée pour entraîner en rotation ledit anneau d'actionnement (250) lorsque la broche (180) coulisse à l'intérieur de ladite deuxième partie (280b) dudit patin (280).

2. Système inverseur de poussée selon la revendication 1, dans lequel la pluralité de pales (140) est adaptée, dans la configuration déployée, pour obstruer complètement ledit passage.

3. Système inverseur de poussée selon la revendication 1 ou la revendication 2, dans lequel les pales (140) de la pluralité de pales (140) du mécanisme d'iris (190) sont réalisées avec une structure en sandwich.

4. Système inverseur de poussée selon l'une quelconque des revendications précédentes, dans lequel les pales (140) de la pluralité de pales (140) du mécanisme d'iris (190) ont une forme non plane, par exemple dans lequel le mécanisme d'iris (190) est réalisé sous la forme d'un dôme, de préférence un dôme sphérique, et chaque pale (140) de la pluralité de pales (140) du mécanisme d'iris (190) est réalisée sous la forme d'un panneau incurvé adapté pour recouvrir une partie dudit dôme.

5. Système inverseur de poussée selon la revendication 4, dans lequel le mécanisme d'iris (190) est réalisé sous la forme d'un cône tronqué, et chaque pale (140) de la pluralité de pales (140) du mécanisme d'iris (190) est réalisée sous la forme d'un panneau incurvé adapté pour couvrir une partie dudit cône tronqué.

6. Système inverseur de poussée selon l'une quelconque des revendications 1 à 3, dans lequel la pluralité de pales (140) du mécanisme d'iris (190) est agencée dans un plan sensiblement perpendiculaire à ladite direction axiale (10).

7. Système inverseur de poussée selon l'une quelconque des revendications précédentes, dans lequel chaque pale (140) du mécanisme d'iris (190) a au moins une broche (141) et un évidement (142), adaptés chacun pour coopérer respectivement avec un évidement (142) et une broche (141) de pales adjacentes, de sorte que dans la configuration déployée, la position relative des pales (140) soit verrouillée.

8. Système inverseur de poussée selon l'une quelconque des revendications précédentes, comprenant en outre une pluralité de guides d'écoulement à la sortie (110) reliés à la structure de translation (90) pour translation, et adaptés pour guider l'écoulement à la sortie de l'air vers l'environnement extérieur à travers ladite ouverture (12) circonférentielle définie entre ladite structure de translation (90) et ladite structure fixe (80) lorsque la structure de translation (90) est dans ladite position d'ouverture.

9. Système de propulsion de turboréacteur (30) pour un aéronef, le système de propulsion de turboréacteur comprenant :
- un moteur central (200), s'étendant le long d'une direction axiale (10), et adapté pour définir intérieurement un premier chemin d'écoulement pour l'air ;
- une nacelle de moteur (40), agencée au moins partiellement autour du moteur central (200), et comprenant une partie avant de la nacelle de moteur (50) ;
- un conduit de dérivation (430), situé entre le moteur central (200) et la nacelle de moteur (40) et adapté pour définir un deuxième chemin d'écoulement pour l'air ; et
- un système inverseur de poussée (60) selon l'une quelconque des revendications précédentes, le système inverseur de poussée (60) étant agencé en aval de la partie avant de la nacelle de moteur (50) de la nacelle de moteur (40), et la structure fixe (80) du système inverseur de poussée (60) étant agencée reliée à ladite partie avant de la nacelle de moteur (50).

10. Système de propulsion de turboréacteur selon la revendication 9, dans lequel les pales (140) de la pluralité de pales (140) dans la configuration de repos permettent à l'air de passer dans le conduit de dérivation (430), et dans la configuration déployée, obstruent au moins partiellement ledit passage d'air dans le conduit de dérivation (430).

11. Système de propulsion de turboréacteur selon la revendication 10, dans lequel ledit conduit de dérivation (230), dans un plan de section transversale transversal à la direction axiale (10), a une section transversale en forme d'anneau ou de O, et dans lequel ledit mécanisme d'iris (190) est agencé sur le même axe que ledit conduit de dérivation (430), grâce à quoi la pluralité de pales (140) est adaptée, dans la configuration déployée, pour obstruer complètement ledit conduit de dérivation (430).

12. Système de propulsion de turboréacteur selon l'une quelconque des revendications 9 à 11, comprenant en outre un pylône (20), adapté pour supporter ledit système de propulsion de turboréacteur (30) au moyen de la liaison de ladite nacelle de moteur (40) à une aile dudit aéronef, **caractérisé en ce que** ledit guide (280) est entièrement logé à l'intérieur dudit pylône (20).

13. Système de propulsion de turboréacteur selon l'une quelconque des revendications 9 à 11, comprenant en outre :
- un pylône (20), adapté pour supporter ledit système de propulsion de turboréacteur (30) en reliant ladite nacelle de moteur (40) à une aile dudit aéronef ;
- un système de couplage de pylône (160) adapté pour suspendre le système inverseur de poussée (60) au pylône (20) et pour permettre un mouvement de translation le long d'une direction parallèlement à la direction axiale (10) de la structure de translation (90) du système inverseur de poussée (60) ;
dans lequel le mécanisme d'iris (190) est contraint en permanence au système de couplage de pylône (160) et est adapté pour être relié à l'une ou à l'autre parmi la structure fixe (80) ou la structure de translation (90) pour translation avec cette dernière.

14. Système de propulsion de turboréacteur selon l'une quelconque des revendications 9 à 13, dans lequel la structure fixe (80) comprend un panneau extérieur fixe (380) et un panneau intérieur fixe (290), et dans lequel, lorsque la pluralité de pales (140) est dans la configuration de repos, le mécanisme d'iris (190) est agencé dans une position radialement externe par rapport au panneau intérieur fixe (290) entre le panneau intérieur fixe (290) et le panneau extérieur fixe (380).

15. Procédé d'inversion de poussée pour un ensemble propulsion de turboréacteur (30) selon l'une quelconque des revendications 9 à 14, comprenant les étapes consistant à :
a) entraîner le mouvement coulissant de ladite structure de translation (90) du système inverseur de poussée (60) de ladite position repliée à ladite position d'ouverture, de manière à définir une ouverture (12) circonférentielle entre ladite structure de translation (90) et ladite structure fixe (80), ladite ouverture (12) étant adaptée pour permettre l'écoulement à la sortie de l'air depuis ledit conduit de dérivation (430) vers l'environnement extérieur ;
b) entraîner le mouvement conjoint de ladite pluralité de pales (140) du mécanisme d'iris (190) de ladite configuration de repos à ladite configuration déployée pour agencer ladite pluralité de pales (140) de manière à ce qu'elles obstruent au moins partiellement ledit conduit de dérivation (430).
